# EUROPÄISCHE PATENTSCHRIFT

(11) **EP 2 332 878 B1**
(45) Veröffentlichungstag und Bekanntmachung des Hinweises auf die Patenterteilung: **20.06.2012**
(21) Anmeldenummer: 10192733.3
(22) Anmeldetag: 26.11.2010
(51) Int. Cl.: B66C 13/54, B66C 19/00, B60R 21/13, B62D 33/06, B66F 17/00, B60R 21/203

(54) **Sicherheitskabine für den Bediener eines Portalstaplers**
Safety cab for the operator of a straddle carrier
Cabine de sécurité pour l'utilisateur d'un chariot cavalier

(30) Priorität: 10.12.2009 DE 102009057477
(43) Veröffentlichungstag der Anmeldung: 15.06.2011
(73) Patentinhaber: Noell Mobile Systems GmbH, 97080 Würzburg (DE)
(72) Erfinder: Müller, Conrad, 97299, Zell am Main (DE); Brummer, Thomas, 97080, Würzburg (DE)
(74) Vertreter: Rau, Schneck & Hübner

(56) Entgegenhaltungen:
- WO-A1-02/18262
- WO-A1-2005/044642
- DE-A1- 2 340 776
- DE-U1- 20 320 967
- JP-A- 2004 183 349

## Beschreibung

Die Erfindung betrifft eine Sicherheitskabine für den Bediener eines Portalstaplers entsprechend dem Oberbegriff des ersten Patentanspruches.

Die Erfindung ist überall dort anwendbar, wo an Portalstaplern Kabinen für den Bediener angeordnet sind.

Portalstapler sind üblicherweise von einer Person gesteuert und bauen sehr hoch und schmal. Das Tragwerk von Portalstaplern besteht im Wesentlichen aus einem schmalen, hohen Portal, ist auf gummibereiften, frei lenkbaren Rädern gelagert und trägt ein Hubwerk, sodass die zu transportierenden Container auch bei erheblicher Stapelhöhe beidseitig von Stützen überfahren werden können, wobei zwischen den Stützen das geführte Lastaufnahmemittel für die Container angeordnet ist, welches den Container erfasst, anhebt und nach dem Transport an geeigneter Stelle absetzt. Die Bediener- oder Fahrerkabine ist so angeordnet, dass das Bedienpersonal den Hubvorgang gut steuern und überwachen kann, was zur Folge hat, dass die Kabine bis zu 12 m über dem Boden angeordnet ist. Um in die Kabine zu, gelangen, sind unterschiedliche Möglichkeiten bekannt.

Zu den Möglichkeiten, die Kabine zu erreichen, gehören Leitern, Aufstiege an den Stützen oder Kabinen, die entlang der Stützen verfahrbar sind, wie das in DE 203 20 967.1 beschrieben ist.

Die DE 102 39 724 A1 offenbart eine Fahrerkabine, die auf Schwingungsdämpfern gelagert ist. Weiterhin ist eine Fahrerschutzstruktur vorgesehen, mittels der Stoßbelastungen auf die Fahrerkabine an die Schwingungsdämpfer übertragen werden.

Aus der DE 23 40 776 A1 ist eine aufblasbare Schutzhülle bekannt, die den Kranbediener vor Verletzungen schützen soll.

Aus der WO 2008/135 284 A1 ist eine Fahrerkabine mit einer erhöhten Steifigkeit bezüglich eines seitlichen Kraftangriffes bekannt.

Die JP 2004/183 349 A offenbart aufblasbare Sicherheitsvorrichtungen in Form von Airbags in der Fahrerkabine.

Portalstapler sind Fahrzeuge, die geeignet sind, mit oder ohne Last in hohem Tempo zu verfahren, zu beschleunigen und zu bremsen. Trotz elektrischer Bediener/Assistenz-Systeme sind die Maschinen kippgefährdet, wobei das Kippen zum einen aufgrund unangemessener Geschwindigkeit, Beschleunigung oder durch in Häfen nicht selten vorkommende Witterungsbedingungen bedingt ist.

Die Gefahr des Kippens kann mit Hilfe elektronischer Steuerungen eingeschränkt, jedoch nicht vermieden werden.

Kabinen von Portalstaplern weisen nicht nur die Eigenart auf, dass diese sehr hoch am Fahrzeug angeordnet sind, sondern auch, dass diese möglichst ein gutes Sichtfeld auf die darunter liegende Arbeitsfläche haben. Deshalb sind in der Regel in der Kabine von oben bis unten reichende Sichtfenster in alle Richtungen angeordnet. Kabinen für den Bediener eines Portalstaplers können in unterschiedlichen Höhen am Portalstapler angeordnet sein. Daher unterscheiden sich die Anforderungen an die Kabinen von Kabinen, die an ähnlichen Fahrzeugen vorhanden sind.

Aufgabe der Erfindung ist es daher, eine Kabine zu entwickeln, welche im Falle eines Umkippens oder einer Kollision des Portalstaplers bei Aufprall der Kabine auf den Boden oder ein anderes Hindernis aus großer Höhe gewährleistet, dass die Wirkung des Aufpralls auf den Bediener deutlich gemindert wird.

Diese Aufgabe wird durch eine Sicherheitskabine nach den Merkmalen des ersten Patentanspruches gelöst.

Unteransprüche geben vorteilhafte Ausgestaltungen der Erfindung wieder.

Die erfindungsgemäße Lösung sieht eine Sicherheitskabine für den Bediener eines Portalstaplers vor, an der Knautschzonen in Form von Deformationselementen oder Dämpfungselemente angeordnet sind, welche an geeigneter Stelle der Außenseite der Kabine dafür sorgen, dass im Falle eines Aufpralls die Verformung des Deformationselementes oder des Dämpfungselementes erfolgt oder aber die auftretenden Kräfte von diesen aufgenommen werden, wobei bei Aufprall eine Verformung erfolgt. Durch die Deformation des Deformationselementes wird kinematische Energie in Verformungsenergie umgewandelt. Der Aufprall wird dadurch gedämpft. Die Deformationselemente werden daher auch als Dämpfungselemente bezeichnet. Damit bleibt die Verzögerung auf ein für den Bediener erträgliches Maß beschränkt. Die Verformung kann reversibel oder irreversibel sein. Des Weiteren sieht die Lösung vor, dass in der Kabine an geeigneter Stelle eine oder mehrere Airbag-Systeme bekannten Prinzips installiert werden, welche den sich in Richtung der Aufprallfläche bewegenden Körper des Bedieners von einem Aufprall von Teilen in oder an der Kabine schützen und somit Verletzungen vermeiden.

An der Kabine können Deformationselemente angeordnet sein. Dabei kann es sich zum einen um zylindrische Körper an einer geeigneten Stelle an der Außenseite der Kabine, z. B. an jeder Ecke der zu schützenden Fläche handeln, die bei einem Aufprall deformiert werden. Diese Deformationskörper können aus Metall oder aus Gummi oder einem anderen Werkstoff bestehen, welcher mittels plastischer oder elastischer Verformung Energie aufnimmt. Es kann sich in vorteilhafter Weise auch um Hydraulikzylinder oder Federn handeln. Alle Deformationselemente müssen immer so ausgelegt sein, dass dem Aufprall der Kabine eines Portalstaplers mit Container entsprechende Deformationskräfte entgegengesetzt werden.

Als Deformationselemente sind auch flächige Körper anordenbar, beispielsweise durchsichtige Formkörper, die aus Duroplast bestehen und durch ihre Verformung oder ihre Zerstörung auftretende Kräfte aufnehmen. Selbstverständlich ist auch eine Kombination unterschiedlicher Deformationselemente untereinander möglich, das heißt, flächige durchsichtige Formkörper aus Duroplast können problemlos mit Deformationselementen aus Gummi oder aus Stahlblech kombiniert werden.

Weiterhin ist es vorteilhaft, Airbags innerhalb oder außerhalb der Sicherheitskabine anzuordnen. Beispielsweise kann in vorteilhafter Weise ein Airbag im Lenkrad angeordnet sein. Ein rolloartiger Airbag ist vorteilhaft über den Sichtfenstern in der Richtung anzuordnen, in die ein Umkippen oder ein Zusammenprall möglich ist.

Eine andere Möglichkeit, die auftretenden Kräfte für die Sicherheitskabine im Fall eines Aufpralls oder eines Umkippens zu senken, besteht darin, die Kabine an oder auf einer Schiene mit einem Schlitten anzuordnen und zu fixieren. Die Schienen sind dann in vorteilhafter Weise so auszubilden, dass sie einen sich verengenden Schlitz aufweisen, in den die Kabine mit dem Schlitten hineinfährt. Die Kabine kann auf diesen Vorrichtungen stehend mit einem Gelenk gelagert werden oder aber auch hängend oder stehend und hängend, wobei es weiterhin vorteilhaft ist, wenn die Schienen, die oben und unten angeordnet sind, in Richtung auf ihre Enden einen geringeren Abstand zueinander aufweisen, sodass auch durch diese Anordnung erreicht wird, dass die Bewegung der Kabine in Richtung auf das Ende der Schiene stark verzögert wird, ggf. eine Verformung der Schiene und der gesamten Kabine auftritt, sodass der Aufprall des Bedieners verzögert wird.

Die Lösung hat den Vorteil, dass bei Umkippen oder Kollision des Portalstaplers beim Aufprall der Kabine auf ein Hindernis die Wirkung des Aufpralls auf den Bediener stark gemildert wird.

Im Weiteren wird die Erfindung an einem Ausführungsbeispiel und sechs Figuren erläutert. Die Figuren zeigen:
- Fig. 1:: Sicherheitskabine an einem Portalstapler mit beidseitig ange- ordneten Deformationselementen und Schlit- ten/Schienenlagerung oberhalb und unterhalb der Kabine;
- Fig. 2:: Detaildarstellung von zwei Dämpfungselementen bzw. Defor- mationselementen und der Schienen/Schlittenverbindung der Si- cherheitskabine;
- Fig. 3:: In Fahrtrichtung angeordnete Schienen/Schlittenverbindung und Fahrerkabine mit zwei Dämpfungselementen bzw. Deformati- onselementen in Detaildarstellung;
- Fig. 4:: Sicherheitskabine an einem Portalstapler mit Deformationsele- ment, welches als flächiger Formkörper ausgebildet ist;
- Fig. 5:: Sicherheitskabine und darin und außen angeordnete Airbags;
- Fig. 6:: Sicherheitskabine mit außen angeordnetem Airbag.

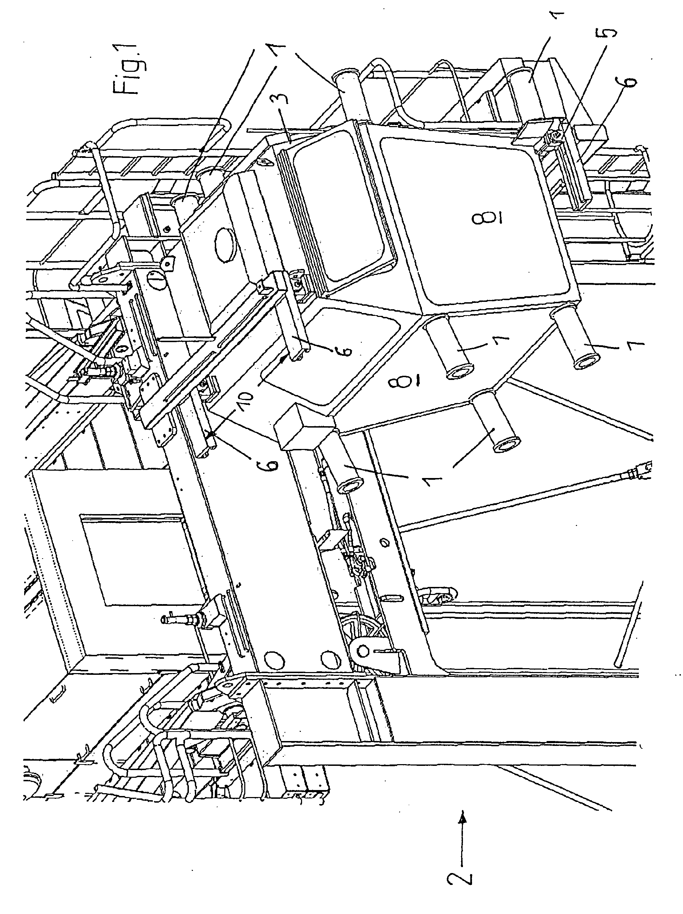

Die Fig. 1 zeigt einen Portalstapler 2, an dem die Sicherheitskabine 3 angeordnet ist, wobei die Kabinenelemente 8, die den Bediener umgeben, durchsichtig sind. Deformationselemente stellen an der gezeigten Sicherheitskabine 3 zylindrische Körper 1 dar, die an jeder Ecke um das Kabinenelement 8 angeordnet sind und im vorliegenden Fall einen Aufprall nach rechts oder nach links dämpfen. Die Sicherheitskabine 3 ist mit Schlitten 5 auf Schienen 6 angeordnet. Es sind jeweils zwei Schienen 6 oben und unten angeordnet. Die Schienen 6 weisen eine leichte Neigung zueinander auf, d. h. der Abstand 10 der Schienen 6 wird nach vom geringer, sodass beim Bewegen der Schlitten 5 entlang der Schiene 6 Zwangskräfte entstehen, die zu einer Deformation der Schienen 6 führen, sodass eine Bewegung der Kabine 3 aus ihrer gezeigten Lage heraus zu einer Deformation der Schienen 6 führt. Die zylindrischen Körper 1 sind so aufgebaut, dass bei einem Umkippen des Portalstaplers 2 durch die auftretenden Kräfte eine Deformation erfolgt, sodass der Aufschlag der Sicherheitskabine 3 gebremst wird.

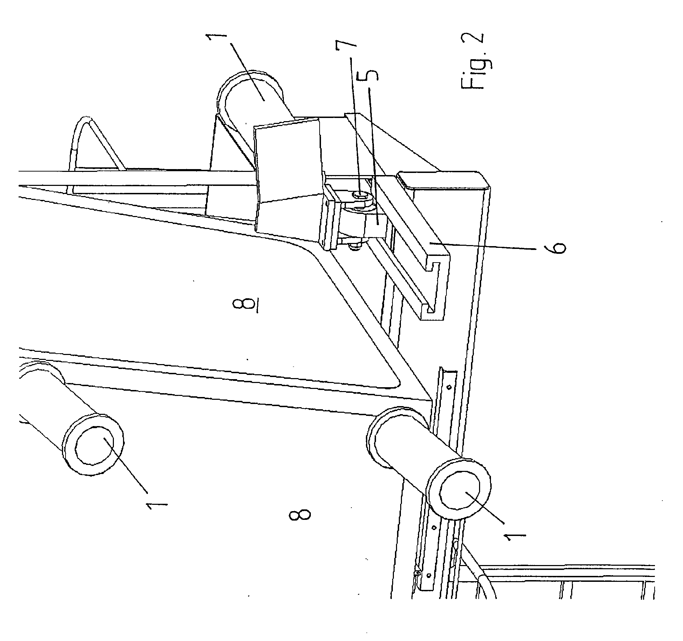

Die Fig. 2 zeigt den zylindrischen Körper 1 im Detail. Gleiches gilt für die Verbindung zwischen Schlitten 5 und Schiene 6. Um die Schlitten 5 einstellen zu können, sind diese mittels einer Achse 7 und einer Mutter verschraubt. Der Schlitz 11 der Schiene 6 wird nach vom sowohl von seiner Höhe als auch von seiner Breite enger, sodass der Schlitten 5 bei einem Aufprall in seiner Fahrt durch die Verformung der Schienen 6 gebremst wird. Alle Schlitten 5 Schienen 6 Verbindungen in den Fig. 1 bis 6 sind grundsätzlich so aufgebaut wie das die Fig. 2 zeigt.

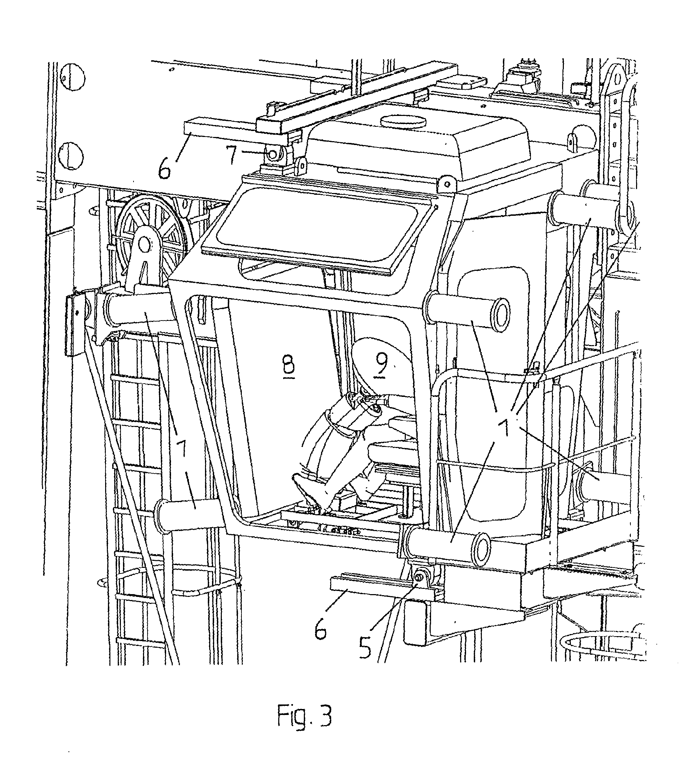

Die Fig. 3 zeigt die zylindrischen Körper 1 als Dämpfungselemente um das Kabinenelement, welche eine durchsichtige Scheibe 8 aus Kunststoff darstellt, die in Fahrtrichtung des Portalstaplers 2 angeordnet sind. Die Kombination aus vier Schienen 6 und Schlitten 5 in diese Richtung ermöglichen auch in diesem Beispiel eine zusätzliche Dämpfung der Kabine.

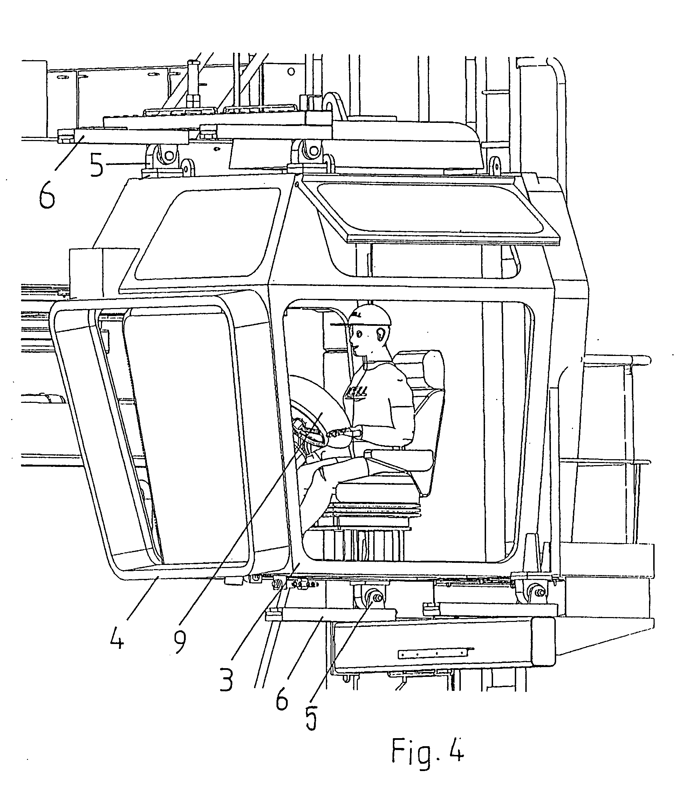

Eine Sicherheitskabine 3, deren Deformationselemente als Formelement 4 um das Sichtfenster in Fahrtrichtung ausgeführt ist, ist der Fig. 4 zu entnehmen. Weiterhin ist ein Airbag 9 auf dem Lenkrad des Bedieners angeordnet. Die Kabine 3 ist ebenfalls durch eine Kombination von Schienen 6 und Schlitten 5 in Fahrtrichtung gesichert. Weiterhin ist ein rolloartiger Airbag 12 auf dem Sichtfenster in Fahrtrichtung angeordnet.

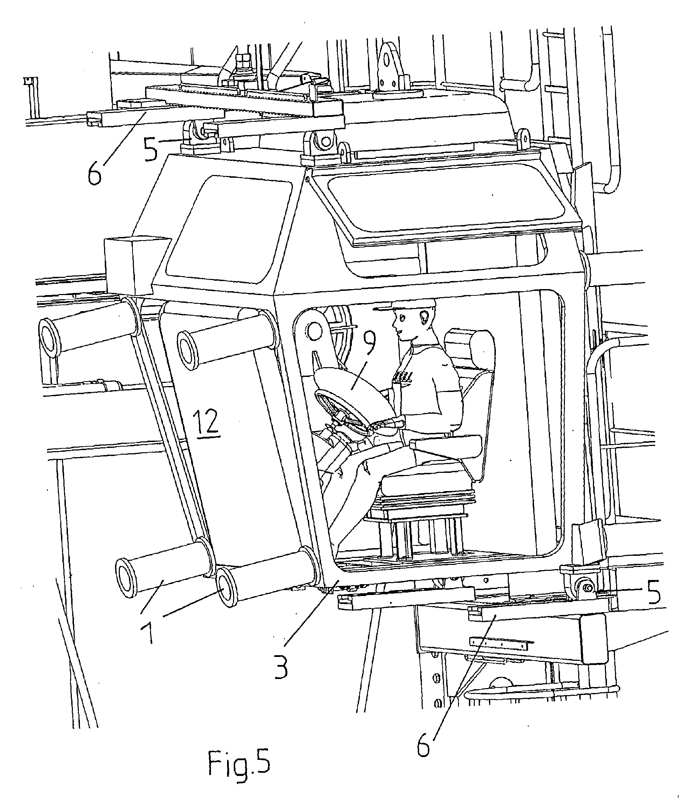

Fig. 5 zeigt Möglichkeiten, ein Airbag 9 zylindrische Körper 1 und die Schiene 6 und Schlitten 5 Kombination an der Sicherheitskabine 3 vorteilhaft anzuordnen sind.

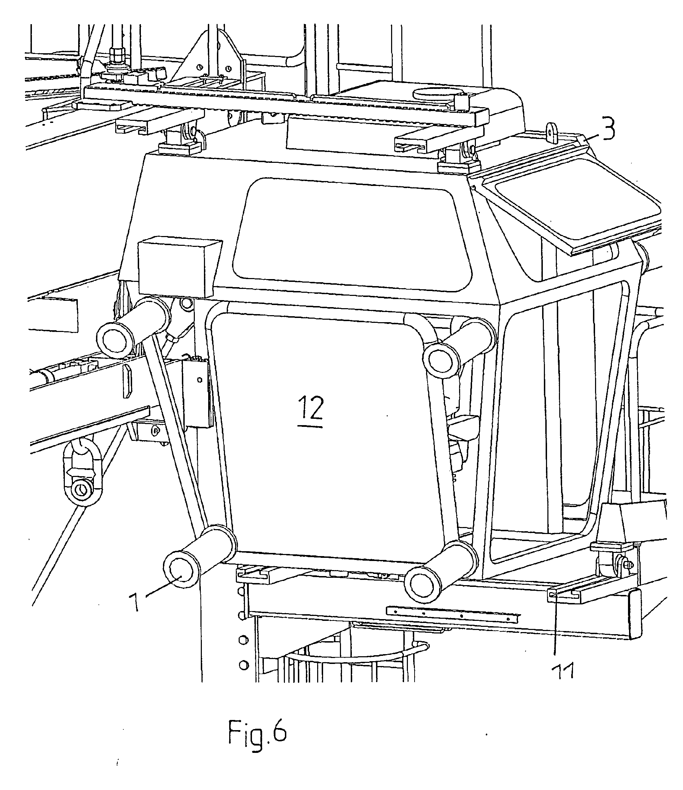

Die Fig. 6 zeigt die Fahrerkabine 3 an der Schlitten 5 und Schienen 6 Kombination mit zylindrischem Körper 1 als Deformationselement um die Fahrerkabine 3 und einen Airbag 12 am Sichtfenster der Fahrerkabine 3 vor dem Fahrzeugführer.

## Patentansprüche

1. Sicherheitskabine für den Bediener eines Portalstaplers zum Transportieren und Stapeln von Containern **dadurch gekennzeichnet, dass** an der Kabine (3) ein Deformationselement (1, 4) angeordnet ist.

2. Sicherheitskabine nach Anspruch 1, **dadurch gekennzeichnet, dass** die Deformationselemente zylindrische Körper (1) an der zu schützenden Fläche darstellen.

3. Sicherheitskabine nach Anspruch 1, **dadurch gekennzeichnet, dass** die Deformationselemente Formkörper um das Sichtfenster darstellen.

4. Sicherheitskabine nach Anspruch 3, **dadurch gekennzeichnet, dass** die flächigen Formkörper durchsichtige Formkörper aus Duroplast darstellen.

5. Sicherheitskabine nach den Ansprüchen 1 bis 4, **dadurch gekennzeichnet, dass** die Deformationselemente Hydraulikzylinder oder Federn darstellen.

6. Sicherheitskabine nach den Ansprüchen 1 bis 5, **dadurch gekennzeichnet, dass** die Deformationselemente ausknickende Gummielemente darstellen.

7. Sicherheitskabine nach Anspruch 1, **dadurch gekennzeichnet, dass** die Deformationselemente eine Schienen (6) Schlitten (5)-Verbindung zwischen Kabine (3) und dem Portalstapler (2) darstellen, wobei Schiene (6) und Schlitten (5) geeignet sind, bei einem Aufprall gegeneinander so zu verfahren, dass der Aufprall gebremst wird.

8. Sicherheitskabine nach Anspruch 7, **dadurch gekennzeichnet, dass** die Schienen (6) in Richtung auf ihre Enden einen sich verjüngenden Schlitz (11) aufweisen.

9. Sicherheitskabine nach den Ansprüchen 7 und 8, **dadurch gekennzeichnet, dass** die Schienen (6) in Richtung auf ihre Enden so angeordnet sind, dass sich der Abstand (10) zur jeweils anderen Schiene (6) verringert, sodass ein Moment in Richtung auf die jeweils andere Schiene (6) auftritt.

10. Sicherheitskabine nach den Ansprüchen 7 bis 9, **dadurch gekennzeichnet, dass** die Schienen- und Schlitten-(6, 5)verbindung oben und unten in Aufprallrichtung der Kabine (3) angeordnet sind.

11. Sicherheitskabine nach den Ansprüchen 1 bis 10, **dadurch gekennzeichnet, dass** ein Airbag (9) im Lenkrad angeordnet ist.

12. Sicherheitskabine nach den Ansprüchen 1 bis 11, **dadurch gekennzeichnet, dass** rolloartige Airbags (12) über den Kabinenscheiben (8) angeordnet sind.

## Claims

1. Safety cab for the operator of a straddle carrier for transporting and stacking containers, **characterised in that** a deformation element (1, 4) is arranged on the cab (3).

2. Safety cab according to claim 1, **characterised in that** the deformation elements comprise cylindrical bodies (1) on the area to be protected.

3. Safety cab according to claim 1, **characterised in that** the deformation elements comprise moulded elements around the viewing window.

4. Safety cab according to claim 3, **characterised in that** the flat moulded elements consist of transparent moulded elements made of Duroplast.

5. Safety cab according to claims 1 to 4, **characterised in that** the deformation elements comprise hydraulic cylinders or springs.

6. Safety cab according to claims 1 to 5, **characterised in that** the deformation elements comprise bending rubber elements.

7. Safety cab according to claim 1, **characterised in that** the deformation elements comprise a rail (6)-slide (5) connection between the cab (3) and the straddle carrier (2), wherein the rail (6) and slide (5) are designed to move against one another upon impact in order to soften the impact.

8. Safety cab according to claim 7, **characterised in that** the rails (6) have a tapering slot (11) in the direction of their ends.

9. Safety cab according to claims 7 to 8, **characterised in that** the rails (6) are arranged in the direction of their ends, so that the distance (10) from the respective other rail (6) is reduced so that a torque occurs in the direction of the other respective rail (6).

10. Safety cab according to claims 7 to 9, **characterised in that** the rail and slide (6, 5) connections are arranged at the top and at the bottom in the impact direction of the cab (3).

11. Safety cab according to claims 1 to 10, **characterised in that** an airbag (9) is arranged in the steering wheel.

12. Safety cab according to claims 1 to 11, **characterised in that** blind-like airbags (12) are arranged over the cab windows (8).

## Revendications

1. Cabine de sécurité pour l'utilisateur d'un chariot cavalier pour le transport et l'empilement de containers **caractérisée en ce qu'**un élément de déformation (1, 4) est attenant à la cabine (3).

2. Cabine de sécurité selon la revendication 1 **caractérisée en ce que** les éléments de déformation sont représentés par des corps cylindriques (1) sur la surface à protéger.

3. Cabine de sécurité selon la revendication 1 **caractérisée en ce que** les éléments de déformation sont représentés par des corps moulés autour du hublot.

4. Cabine de sécurité selon la revendication 3 **caractérisée en ce que** les corps moulés plans sont représentés par des corps moulés transparents en Duroplast.

5. Cabine de sécurité selon les revendications de 1 à 4 **caractérisée en ce que** les éléments de déformation sont représentés par des cylindres hydrauliques ou des ressorts.

6. Cabine de sécurité selon les revendications de 1 à 5 **caractérisée en ce que** les éléments de déformation sont représentés par des éléments en caoutchouc se déboitant.

7. Cabine de sécurité selon la revendication 1 **caractérisée en ce que** les éléments de déformation sont représentés par une liaison rails (6)-chariot (5) entre la cabine (3) et le chariot cavalier (2), le rail (6) et le chariot (5) étant conçus, au cas où ils s'entrechoqueraient, de faire en sorte à freiner le choc.

8. Cabine de sécurité selon la revendication 7 **caractérisée en ce que** les rails (6) présentent une fente (11) s'amenuisant en direction de ses extrémités.

9. Cabine de sécurité selon les revendications 7 et 8 **caractérisée en ce que** les rails (6) sont disposés de telle manière en direction de leurs extrémités que la distance (10) d'un rail par rapport à l'autre rail (6) est diminuée, de sorte qu'un moment est généré en direction de l'autre rail (6) et vice versa.

10. Cabine de sécurité selon les revendications de 7 à 9 **caractérisée en ce que** la liaison rails - et chariot (6, 5) est disposée en haut et en bas dans la direction de l'impact de la cabine (3).

11. Cabine de sécurité selon l'une des revendications de 1 à 10 **caractérisée en ce qu'**un airbag (9) est disposé sur le volant.

12. Cabine de sécurité selon les revendications de 1 à 11 **caractérisée en ce que** des airbags (12) en forme de stores sont disposés sur les vitres de la cabine (8).
